# FASCICULE DE BREVET EUROPEEN

(11) **EP 3 938 765 B1**
(45) Date de publication et mention de la délivrance du brevet: **25.06.2025**
(21) Numéro de dépôt: 20710921.6
(22) Date de dépôt: 12.03.2020
(51) Int. Cl.: G01N 21/88, G01N 21/89

(54) **SYSTÈME DE CONTRÔLE VISUEL POUR UN PRODUIT ÉTENDU**
SICHTKONTROLLSYSTEM FÜR EIN AUSGEBREITETES PRODUKT
VISUAL CONTROL SYSTEM FOR AN EXTENDED PRODUCT

(30) Priorité: 15.03.2019 EP 19290015
(43) Date de publication de la demande: 19.01.2022
(73) Titulaire: CLECIM SAS, 42600 Savigneux (FR)
(72) Inventeur: FONTAINE, Yvon, 42600 Montbrison (DE); GOUTTEBROZE, Stéphane, 42600 Precieux (FR)
(86) Numéro de dépôt international: PCT/EP2020/056585
(87) Numéro de publication internationale: WO 2020/187675

(56) Documents cités:
- WO-A1-2014/041416
- JP-A- H0 989 803
- US-A1- 2011 050 872
- US-A1- 2017 074 805
- US-A1- 2018 082 551

## Description

La présente invention concerne un système de contrôle visuel pour un produit étendu selon le préambule de la revendication 1.

Afin de contrôler la qualité de produit étendu de type fil, tube, plaque, bande ou une série d'éléments juxtaposés, des systèmes de contrôle visuel dudit produit sont connus et comprennent :
- une zone de mesure comprenant une unité d'inspection automatique et en temps réel d'une portion de produit en défilement selon un parcours longitudinal,
- la dite unité d'inspection délivrant au moins une cartographie comprenant des informations qualitatives de ladite portion inspectée du produit.

Après cette phase d'inspection automatique, il est ainsi possible pour un opérateur d'une ligne de production, de traitement, de revêtement, etc. du dit produit de détecter de potentiels défauts ou d'autres caractéristiques du produit au moyen d'un moniteur de la cartographie, afin de garantir une qualité de tolérances prescrites.

Un exemple d'application est le domaine du contrôle automatique de produit étendus de type métallurgique, entre autres de type fil, tube, plaque, bande, et pour lequel la demanderesse a développé une unité d'inspection automatique et en temps réel sous la marque internationalement enregistrée SIAS^{®} bien connue des plus grands producteurs de métal.

D'autres applications d'une telle unité d'inspection automatique sont aussi possibles, par exemple dans le domaine de séries d'éléments juxtaposés, tels que ceux de la production de produits de masse en continu sur une ligne à défilement. A titre d'exemple, on peut citer les lignes de productions de consommables (chocolats, pains, gâteaux, médicaments, etc.), de récipients (yaourts, bouteilles, gobelets, etc.), de pièces mécaniques ou électronique (vis, rondelles, circuits imprimés, etc.), de produit plat (papier, verre, tissu, cuir, caoutchouc, etc.) : voir WO2014/041416A1 pour exemple.

Une telle unité d'inspection permet ainsi de pouvoir automatiquement détecter, localiser, classifier puis de visualiser des défauts de produit en défilement sur un moniteur en y présentant un enregistrement de cartographie (incluant par exemple des images du produit et tout particulièrement ses défauts) comprenant les informations qualitatives de chacune des dites portions inspectées du produit. Le document JPH0989803A est dedié à une méthode et un dispositif d'inspection des rayures de surface d'une bande métallique.

Cette visualisation via un moniteur est certes très pratique mais peut atteindre ses limites pour un contrôle visuel en temps réel par un opérateur, surtout si le produit inspecté défile à haute vitesse sous l'unité d'inspection, par exemple à plus de 0,1 m/s. C'est pourquoi, pour des vitesses de défilement du produit plus élevées, un complément de contrôle de visuel via un moniteur peut ainsi se faire à minima par une relecture ralentie de l'enregistrement cartographique provenant de l'unité d'inspection.

Enfin, il est usuel, une fois que l'opérateur a pris connaissance de l'enregistrement cartographique de la présence de défauts à contrôler visuellement, de refaire passer le produit dans un autre module d'inspection visuel de type table ou convoyeur à une vitesse de défilement adaptée à la vision humaine et pouvant même arrêter une portion précise de produit sous une zone d'inspection visuelle où la cartographie indiquerait un défaut à contrôler. De la sorte, l'opérateur peut visuellement relocaliser, puis revérifier physiquement la présence des défauts précédemment enregistrés par cartographie sur son moniteur (ou son PC/tablette) et si nécessaire les marquer dans le but de les résorber ou sinon de les mettre en évidence comme portion de produit inapte à la vente par exemple.

Toutefois, si il s'avère qu'un des défauts détectés était un artefact dû à une quelconque condition inattendue de mesure de l'unité d'inspection automatique, l'opérateur ne pourra ainsi pas retrouver aisément et donc rapidement le lieu de l'artefact pour en déduire finalement que ce n'était pas un défaut.

Le document US2017074805A1 divulgue un interface pour un opérateur de contrôle de triage pour le bois d'oeuvre.

Un but de la présente invention est de proposer un système de contrôle visuel pour un produit étendu qui permet de simplifier et améliorer le contrôle visuel (humain) requis suite à une inspection automatique dudit produit telle que présentée ci-dessus.

Un tel système est proposé au travers des caractéristiques de la revendication 1.

A partir d'un système de contrôle visuel pour un produit étendu de type fil, tube, plaque, bande ou série d'éléments juxtaposés comprenant :
- une première zone de mesure comprenant une unité d'inspection automatique d'au moins une portion de produit en défilement selon un parcours longitudinal,
- la dite unité d'inspection délivrant, si possible en temps réel, au moins une cartographie comprenant des informations qualitatives de ladite portion inspectée du produit, l'invention prévoit que le dit système comprend une deuxième zone de contrôle disposée en aval de la première zone et comprenant un moyen de surimpression d'au moins les informations qualitatives sur la portion du produit dans la dite deuxième zone, la deuxième zone étant dédiée à permettre à un opérateur de contrôle de visualiser la dite portion à son arrivée dans la deuxième zone. A cet effet, un module de traçage (par voie de reconnaissance, de valeurs métriques, etc.) de ladite portion peut délivrer un signal d'identification de la portion du produit inspectée par la première zone vers le moyen de surimpression de la deuxième zone. Ainsi, les informations qualitatives de la portion mesurée par inspection automatique dans la première zone peuvent être surimprimées en toute exactitude sur la même portion du produit dans la deuxième zone.

L'interfaçage opérateur-produit lors du contrôle visuel requis suite à une inspection automatique dudit produit est ainsi avantageusement effectué de manière directe grâce au moyen de surimpression permettant à l'opérateur de voir en superposition le produit réel, ses défauts ou qualités réelles, et les informations qualitatives mesurées en amont par l'unité d'inspection automatique (défauts ou artefacts mesurés). Le dit interfaçage est aussi effectué de manière plus simple, car lors du contrôle visuel physique, il n'y plus la nécessité de devoir également visionner un enregistrement (sur écran/PC/tablette) provenant de cartographies préenregistrées précédemment par l'unité d'inspection automatique, puis de devoir les retrouver sur le produit dans la zone de contrôle visuel physique.

Cette simplification permet ainsi à un opérateur de gagner un temps précieux et de lui permettre de se laisser simplement guider par la localisation automatique des défauts sur-imprimés ou autres artefacts sans devoir les rechercher voire jamais les trouver.

Un ensemble de sous-revendications présente également des avantages de l'invention.

En particulier, dans la deuxième zone, le moyen de surimpression peut afficher dynamiquement des marques de localisation (marqueurs, flèches...) , de caractérisation (type de défauts) et/ou de quantification (intensité du défaut) liées aux informations qualitatives détectées pour des portions du produit lors de l'inspection automatique dans la première zone.

De plus, la deuxième zone est située dans une zone fixe dédiée à une inspection visuelle du produit par un opérateur, idéalement dans laquelle le défilement du produit peut être ralenti voire arrêté. De cette façon, il est avantageusement possible de permettre un contrôle visuel humain pour de hautes vitesses (> 0.1 m/s) de défilement du produit dans la première zone d'inspection automatique. Il est alors enfin possible pour un opérateur d'avoir le temps de pouvoir si possible résorber un défaut localement, par exemple au moyen d'un action manuelle de pierrage, de sorte que le produit est immédiatement remis sous un standard de qualité tolérée.

Le système selon l'invention est spécialement bien adapté dans le cas où le produit est métallique, l'unité d'inspection et le moyen de surimpression étant disposé en aval d'un module de production, traitement ou de revêtement de surface du produit. En effet, dans le domaine des produits étendus métalliques comme des fils, tubes, plaques ou des bandes en particulier, la production impose des vitesses de production, traitement ou autre revêtement qui excèdent souvent 0,1 m/s alors que les dits produits sont inspectés automatiquement dans la première zone. Ces produits étant aussi très volumineux et lourds, et leur production, traitement ou autre revêtement étant coûteux et complexe, il est majeur de les inspecter visuellement au plus tôt en cas de défauts potentiels qui les rendraient irrémédiablement inaptes à subir des traitements ultérieurs coûteux. Le moyen de surimpression est ainsi une solution très apte à pouvoir visualiser de tels défauts de manière précoce et interactive pour un opérateur de contrôle de qualité, sans devoir réitérer une nouvelle recherche visuelle des dits défauts après avoir obtenu une cartographie complète des défauts à la suite du défilement complet du produit dans la première zone.

Des exemples de réalisation et d'application sont fournis à l'aide de figures décrites :
- Figure 1: Système de contrôle visuel selon un premier mode de réalisation de l'invention,
- Figure 2: Système de contrôle visuel selon un deuxième mode de réalisation de l'invention,
- Figure 3: Système de contrôle visuel selon un troisième mode de réalisation de l'invention.

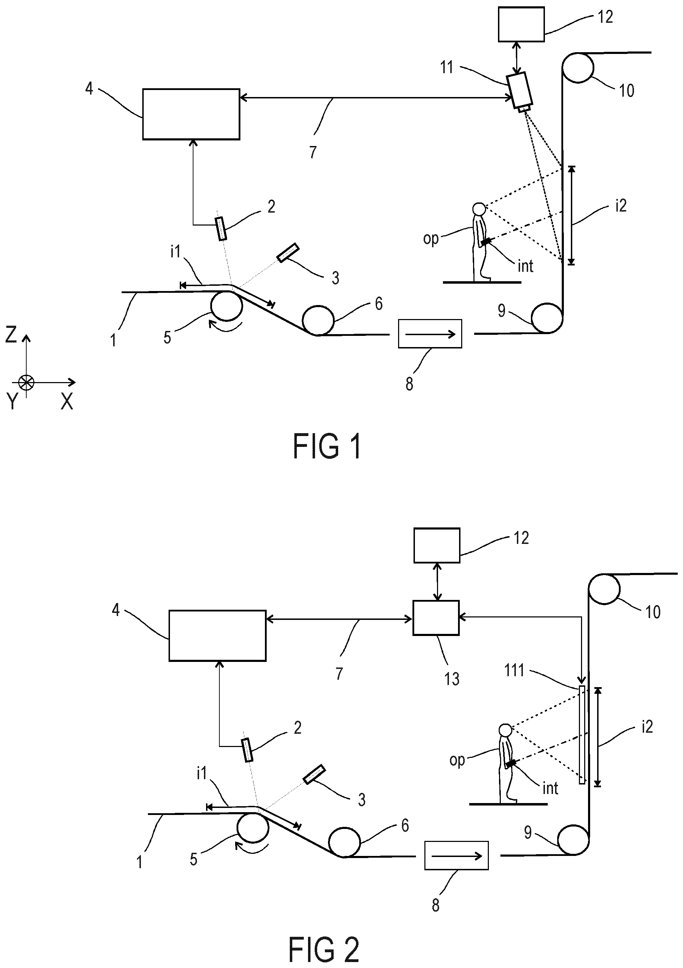

Figure 1 présente un premier mode de réalisation de l'invention sur lequel est présenté un système de contrôle visuel pour un produit étendu (1) de type fil, tube, plaque, bande ou série d'éléments juxtaposés comprenant :
- une première zone (i1) de mesure comprenant une unité d'inspection - caméra (2), moyen d'illumination (3) d'une face du produit, unité de traitement de données (4) - automatique d'une portion de produit en défilement selon un parcours longitudinal (X),
- la dite unité d'inspection (4) délivrant au moins une cartographie (7) comprenant des informations qualitatives de ladite portion inspectée du produit,
- une deuxième zone (i2) de contrôle disposée en aval de la première zone (i1) et comprenant un moyen de surimpression (11) d'au moins les informations qualitatives directement sur la portion du produit(ici la face inspectée automatiquement sous la première zone), la deuxième zone étant dédiée à permettre un opérateur (op) de visualiser la dite portion de produit à son arrivée dans la deuxième zone.

Un module de traçage (non représenté) de portion de bande délivre un signal d'identification de la portion du produit inspectée par la première zone au moyen de surimpression de la deuxième zone, afin que les informations qualitatives de la portion mesurée par inspection automatique dans la première zone puissent être sur-imprimées en toute exactitude sur la même portion du produit dans la deuxième zone.

Le moyen de surimpression affiche dynamiquement des marques de localisation (marqueurs, flèches...) , de caractérisation (type de défauts) et/ou de quantification (intensité du défaut) liées aux informations qualitatives détectées pour des portions du produit. Il peut aussi afficher d'autres informations utiles à l'opérateur, comme pour exemples l'épaisseur du produit, son matériau, ses tolérances de production, traitement ou revêtement, sa vitesse enregistrée à différents stades du défilement, ainsi que des alertes de défauts liés à des marques de pièces usées ou abimés provenant des installations dans lesquelles défilait le produit.

Le moyen de surimpression (11) peut être couplé à un système de gestion de base de données (12) des informations qualitatives (7) émises par l'unité d'inspection (2, 3, 4), et optionnellement de données interactives émises par une interface interactive (int) depuis l'opérateur et destinées à confirmer, infirmer ou modifier les dites données qualitatives sur-imprimées. De la sorte, si par exemple l'opérateur détecte un artefact alors que la donnée qualitative associée indiquait un défaut spécifique, il peut le modifier immédiatement sous une nouvelle catégorie « artefact ». Ainsi, dans la base de données (12), la cartographie issue de l'unité d'inspection (2, 3, 4) pourra être immédiatement actualisée avec l'information réelle corrigée.

Une telle interface interactive (int) peut comprendre un détecteur de signaux (gestes, stylet, pointeurs...) et être aisément est couplée au moyen de surimpression afin qu'un opérateur interagisse sur les informations qualitatives surimprimées sur le produit. Enfin, l'interface interactive initie alors une actualisation de la banque de données réelles mais aussi de données d'apprentissage liée aux informations qualitatives livrées par l'unité d'inspection, celui pouvant en effet comprendre une intelligence artificielle nécessitant des apprentissages par exemple lors de changements de paramètres de produit ou de leur traitement.

Le moyen de surimpression peut aussi comprendre un ou des filtres optiques ou autres moyens d'illumination spectrale qui permettraient à l'opérateur de mieux discerner le défaut réel du produit sur-imprimé.

Dans le cas de la figure 1, le moyen de surimpression est un vidéoprojecteur (11) qui est disposé préférentiellement au-dessus de l'opérateur et de la deuxième zone (ici verticale). Plus généralement, il est avantageux que le moyen de surimpression (tel un vidéoprojecteur) ait des axes de projection/réflexion proches de la direction de défilement du produit et, surtout éloigné de l'axe de vision de l'opérateur. De la sorte, des réflexions directes du projecteur qui éblouiraient l'opérateur peuvent être évitées, par exemple pour un produit à caractère réfléchissant (comme un produit à texture métallique).

De nos jours, de tels vidéoprojecteur dits « interactifs » permettent aisément de réaliser une interface interactive (int) comme précédemment décrite sur une zone plane telle que dans la deuxième zone (i2).

Dans l'exemple selon figure 1, le moyen de surimpression comme un vidéoprojecteur projette fort simplement les informations qualitatives directement sur le produit, plus précisément sur la face de produit inspectée automatiquement dans la première zone (i1). Toutefois, il serait aussi possible que le dit moyen de surimpression projette les informations qualitatives sur un écran transparent disposé entre l'opérateur et le produit et étant de taille dimensionnée pour permettre à un opérateur de visualiser l'intégralité de la portion de produit en arrière-plan de l'écran. L'opérateur pourrait ainsi directement toucher l'écran avec sa main (ou un stylet) pour interagir avec les données projetées.

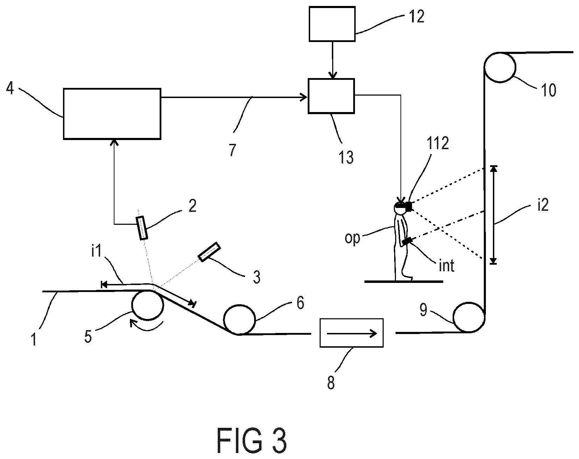

L'exemple de la figure 1 (comme les exemples suivant selon figures 2 et 3) montre une ligne de défilement de produit allongé où :
- la deuxième zone est située dans une zone fixe dédiée à une inspection visuelle du produit par un opérateur (op), idéalement dans laquelle le défilement du produit est ralenti voire arrêté afin de permettre un contrôle visuel du produit réel et de ses défauts sur-marqués par un opérateur (humain) ;
- la première zone en amont et la deuxième zone en aval sont intercalées
   - dans un seul ou plusieurs plans (8) distincts longitudinaux (X, Z) à défilement continu du produit ; en d'autres termes et pour exemple, la ligne comprenant la première zone (i1) peut être une ligne de production du produit en défilement continu couplée à une autre ligne en aval comprenant un accumulateur pour ralentir le défilement continu du produit et permettre l'inspection du produit grâce au système selon l'invention dans la deuxième zone (i2) ;
   - et/ou dans un seul ou plusieurs plans (8) longitudinaux (X, Z) à défilement discontinu du produit ; en d'autres termes et pour exemple, la ligne comprenant la première zone (i1) peut être une ligne de production du produit en défilement continu qui comprend une bobineuse du produit, puis le produit est à nouveau débobiné dans une autre ligne distincte et en aval de la ligne de production à une vitesse suffisamment basse du produit pour permettre l'inspection du produit grâce au système selon l'invention dans la deuxième zone (i2) . Selon ce schéma, il est alors avantageusement plus aisé de retrouver automatiquement et de supprimer dans la ligne distincte en aval de la ligne de production des parties mieux délimitées et inspectées en amont comme déficientes d'une bande mise sous une bobine « mère » et produite dans la première ligne, puis débobinée dans la ligne distincte en aval pour finalement produire une bande « fille » exempte de défauts et pouvant être rembobinée sous garantie optimale de tolérances souhaitées.

**Figure 2** présente un système de contrôle visuel selon un deuxième mode de réalisation de l'invention, principalement identique à celui de la figure 1.

Alternativement, le moyen de surimpression est un écran graphique (111) disposé face à la deuxième zone (i2) et tel qu'à cristaux liquide partiellement sinon complétement transparent de taille dimensionnée pour permettre à un opérateur de visualiser l'intégralité de la portion de produit en arrière-plan de l'écran. Cet écran graphique peut aussi être tactile (doigt, stylet...) pour permettre une interactivité entre l'opérateur (op) et les données qualitatives (7) ou autres données additionnelles affichées par l'écran.

**Figure 3** présente un système de contrôle visuel selon un troisième mode de réalisation de l'invention, principalement identique à celui de la figure 1.

Alternativement, le moyen de surimpression est une optique de vision virtuelle (112) portée par l'opérateur (op), idéalement sous forme de lunette ou de casque. Cette optique est de nos jours associée à des manettes interactives pour permettre une interactivité entre l'opérateur (op) et les données qualitatives (7) ou autres données additionnelles (données dites de « Réalité Augmentée ») affichées par la dite optique.

## Revendications

1. Système de contrôle visuel pour un produit (1) comprenant :
- une première zone (i1) de mesure comprenant une unité d'inspection (2, 3, 4) automatique d'une portion de produit en défilement selon un parcours longitudinal (X),
- la dite unité d'inspection délivrant au moins une cartographie (7) comprenant des informations qualitatives de ladite portion inspectée du produit,
- une deuxième zone (i2) de contrôle disposée en aval de la première zone et comprenant un moyen de surimpression (11, 111, 112) d'au moins les informations qualitatives sur la portion du produit, la deuxième zone étant dédiée à visualiser la dite portion à son arrivée dans la deuxième zone,
où .
- le produit (1) de type métallurgique est étendu de type fil, tube, plaque ou bande,
- une interface interactive (int) comprenant un détecteur de signaux est couplée au moyen de surimpression afin qu'un opérateur interagisse sur les informations qualitatives projetées,
- l'interface interactive initie une actualisation d'une banque de données d'apprentissage liée aux informations qualitatives livrées par l'unité d'inspection.

2. Système selon revendication 1, pour lequel le moyen de surimpression affiche dynamiquement des marques de localisation de caractérisation et/ou de quantification liées aux informations qualitatives détectées pour des portions du produit.

3. Système selon une des revendications 1 à 2, pour lequel la deuxième zone est située dans une zone fixe dédiée à une inspection visuelle du produit par un opérateur (op), idéalement dans laquelle le défilement du produit est ralenti voire arrêté.

4. Système selon une des revendications 1 à 3, pour lequel le produit est métallique, l'unité d'inspection et le moyen de surimpression étant disposé en aval d'un module de production, traitement ou de revêtement de surface du produit.

5. Système selon une des revendications 1 à 4, pour lequel le moyen de surimpression comprend des filtres optiques ou des moyens d'illumination spectrale.

6. Système selon une des revendications 1 à 5, pour lequel le moyen de surimpression est un vidéoprojecteur (11).

7. Système selon revendication 6, pour lequel le moyen de surimpression projette les informations qualitatives sur le produit.

8. Système selon revendication 6, pour lequel le moyen de surimpression projette les informations qualitatives sur un écran transparent de taille dimensionnée pour permettre à un opérateur de visualiser l'intégralité de la portion de produit en arrière-plan de l'écran.

9. Système selon une des revendications 1 à 5, pour lequel le moyen de surimpression est un écran graphique (111) tel qu'à cristaux liquide partiellement sinon complétement transparent de taille dimensionnée pour permettre à un opérateur de visualiser l'intégralité de la portion de produit en arrière-plan de l'écran.

10. Système selon une des revendications 1 à 5, pour lequel le moyen de surimpression est une optique de vision virtuelle (112) portée par un opérateur, idéalement sous forme de lunette ou de casque.

11. Système selon une des revendications précédentes, pour lequel un module de traçage délivre un signal d'identification de la portion du produit inspectée par la première zone au moyen de surimpression de la deuxième zone.

12. Système selon une des revendications précédentes, pour lequel la première zone en amont et la deuxième zone en aval sont intercalées :
- dans un seul ou plusieurs plans (8) distincts longitudinaux (X, Z) à défilement continu du produit ;
- et/ou dans un seul ou plusieurs plans (8) longitudinaux (X, Z) à défilement discontinu du produit.

## Patentansprüche

1. Sichtkontrollsystem für ein Produkt (1), beinhaltend:
- einen ersten Bereich (i1) zum Messen, der eine automatische Prüfeinheit (2, 3, 4) für einen gemäß einem Längsverlauf (X) durchlaufenden Produktabschnitt beinhaltet,
- wobei die Prüfeinheit mindestens eine Kartographie (7) bereitstellt, die qualitative Informationen über den geprüften Abschnitt des Produkts beinhaltet,
- einen zweiten Bereich (i2) zur Kontrolle, der stromabwärts von dem ersten Bereich angeordnet ist und ein Mittel zum Einblenden (11, 111, 112) mindestens der qualitativen Informationen über den Abschnitt des Produkts beinhaltet, wobei der zweite Bereich dazu bestimmt ist, den Abschnitt bei seiner Ankunft in dem zweiten Bereich zu visualisieren, wobei:
- das Produkt (1) vom metallurgischen Typ ausgebreitet ist und vom Typ Draht, Rohr, Platte oder Band ist,
- eine interaktive Schnittstelle (int), die einen Signaldetektor beinhaltet, mit dem Einblendmittel gekoppelt ist, damit ein Bediener auf die projizierten qualitativen Informationen reagieren kann,
- die interaktive Schnittstelle eine Aktualisierung einer Lerndatenbank initiiert, die mit den durch die Prüfeinheit gelieferten qualitativen Informationen verbunden ist.

2. System nach Anspruch 1, wobei das Einblendmittel Markierungen zur Lokalisierung, zur Charakterisierung und/oder zur Quantifizierung, die mit den für Abschnitte des Produkts detektierten qualitativen Informationen verbunden sind, dynamisch anzeigt.

3. System nach einem der Ansprüche 1 bis 2, wobei sich der zweite Bereich in einem festen Bereich befindet, der für eine visuelle Prüfung des Produkts durch einen Bediener (op) bestimmt ist und in dem das Durchlaufen des Produkts idealerweise verlangsamt oder sogar angehalten wird.

4. System nach einem der Ansprüche 1 bis 3, wobei das Produkt metallisch ist, wobei die Prüfeinheit und das Einblendmittel stromabwärts von einem Produktions-, Verarbeitungs- oder Oberflächenbeschichtungsmodul des Produkts angeordnet sind.

5. System nach einem der Ansprüche 1 bis 4, wobei das Einblendmittel optische Filter oder Mittel zur spektralen Beleuchtung beinhaltet.

6. System nach einem der Ansprüche 1 bis 5, wobei das Einblendmittel ein Videoprojektor (11) ist.

7. System nach Anspruch 6, wobei das Einblendmittel die qualitativen Informationen auf das Produkt projiziert.

8. System nach Anspruch 6, wobei das Einblendmittel die qualitativen Informationen auf einen transparenten Schirm mit einer Größe projiziert, die dazu bemessen ist, einem Bediener zu gestatten, den gesamten Produktabschnitt im Hintergrund des Schirms zu visualisieren.

9. System nach einem der Ansprüche 1 bis 5, wobei das Einblendmittel ein Grafikschirm (111), wie etwa mit Flüssigkristallen, ist, der teilweise, wenn nicht sogar vollständig, transparent ist und eine Größe aufweist, die dazu bemessen ist, einem Bediener zu gestatten, den gesamten Produktabschnitt im Hintergrund des Schirms zu visualisieren.

10. System nach einem der Ansprüche 1 bis 5, wobei das Einblendmittel ein virtuelles Sichtgerät (112) ist, das von einem Bediener getragen wird, idealerweise in Form einer Brille oder eines Helms.

11. System nach einem der vorhergehenden Ansprüche, wobei ein Tracking-Modul dem Einblendmittel des zweiten Bereichs ein Signal zur Identifizierung des von dem ersten Bereich geprüften Abschnitts des Produkts bereitstellt.

12. System nach einem der vorhergehenden Ansprüche, wobei der erste stromaufwärtige Bereich und der zweite stromabwärtige Bereich eingefügt sind:
- in eine einzige oder mehrere verschiedene Längsebenen (8) (X, Z) mit stetigem Durchlauf des Produkts;
- und/oder in eine einzige oder mehrere Längsebenen (8) (X, Z) mit unstetigem Durchlauf des Produkts.

## Claims

1. Visual control system for a product (1), comprising:
- a first, measurement zone (i1) comprising an automatic inspection unit (2, 3, 4) for a portion of product advancing along a longitudinal path (X),
- said inspection unit delivering at least one map (7) comprising qualitative information on said inspected portion of the product,
- a second, control zone (i2) arranged downstream of the first zone and comprising a means (11, 111, 112) for overlaying at least the qualitative information onto the portion of the product, the second zone being dedicated to visualizing said portion as it arrives in the second zone, wherein:
- the product (1) of metallurgical type is extended, of the wire, tube, plate or strip type,
- an interactive interface (int) comprising a detector of signals is coupled to the overlaying means so that an operator interacts with the projected qualitative information,
- the interactive interface initiates updating of a training data bank related to the qualitative information delivered by the inspection unit.

2. System according to Claim 1, wherein the overlaying means dynamically displays location marks, characterization marks and/or quantification marks related to the detected qualitative information for portions of the product.

3. System according to either of Claims 1 and 2, wherein the second zone is located in a fixed zone dedicated to visual inspection of the product by an operator (op), ideally in which the advancement of the product is slowed or even stopped.

4. System according to one of Claims 1 to 3, wherein the product is made of metal, the inspection unit and the overlaying means being arranged downstream of a module for producing, treating or surface-coating the product.

5. System according to one of Claims 1 to 4, wherein the overlaying means comprises optical filters or spectral illumination means.

6. System according to one of Claims 1 to 5, wherein the overlaying means is a videoprojector (11).

7. System according to Claim 6, wherein the overlaying means projects the qualitative information onto the product.

8. System according to Claim 6, wherein the overlaying means projects the qualitative information onto a transparent screen sized to allow an operator to view the entirety of the portion of product in the background of the screen.

9. System according to one of Claims 1 to 5, wherein the overlaying means is a graphic screen (111) such as a partially if not completely transparent liquid-crystal display screen sized to allow an operator to view the entirety of the portion of product in the background of the screen.

10. System according to one of Claims 1 to 5, wherein the overlaying means is a virtual vision optic (112) borne by an operator, ideally in the form of an eyepiece or a headset.

11. System according to one of the preceding claims, wherein a tracking module delivers an identification signal for the portion of the product that is inspected by the first zone to the overlaying means of the second zone.

12. System according to one of the preceding claims, wherein the first, upstream zone and the second, downstream zone are inserted:
- into one or more distinct longitudinal (X, Z) planes (8) with continuous advancement of the product;
- and/or into one or more longitudinal (X, Z) planes (8) with discontinuous advancement of the product.
